# EUROPÄISCHE PATENTSCHRIFT

(11) **EP 4 150 236 B1**
(45) Veröffentlichungstag und Bekanntmachung des Hinweises auf die Patenterteilung: **29.07.2026**
(21) Anmeldenummer: 21721062.4
(22) Anmeldetag: 21.04.2021
(51) Int. Cl.: F16J 13/02, F16J 15/16, B65D 39/00

(54) **HOCHDRUCKDICHTUNGSANORDNUNG UND HOCHDRUCKANLAGE ZUR RADIALEN ABDICHTUNG EINES BEHÄLTERVERSCHLUSSES EINES HOCHDRUCKBEHÄLTERS SOWIE DEREN VERWENDUNG**
HIGH-PRESSURE SEAL ASSEMBLY AND HIGH-PRESSURE SYSTEM FOR RADIALLY SEALING A CONTAINER CLOSURE OF A HIGH-PRESSURE CONTAINER, AND USE THEREOF
ENSEMBLE JOINT D'ÉTANCHÉITÉ HAUTE PRESSION ET SYSTÈME HAUTE PRESSION POUR ÉTANCHÉIFIER RADIALEMENT UNE FERMETURE DE RÉCIPIENT D'UN RÉCIPIENT HAUTE PRESSION, ET LEUR UTILISATION

(30) Priorität: 12.05.2020 DE 102020205905; 12.05.2020 BE 202005321
(43) Veröffentlichungstag der Anmeldung: 22.03.2023
(73) Patentinhaber: Uhde High Pressure Technologies GmbH, 58093 Hagen (DE); thyssenkrupp AG, 45143 Essen (DE)
(72) Erfinder: ZEIGER, Matthias, 59423 Unna (DE); KNAUF, Wilfried, 58313 Herdecke (DE); NÜNNERICH, Peter, 57080 Siegen (DE)
(74) Vertreter: thyssenkrupp Intellectual Property GmbH
(86) Internationale Anmeldenummer: PCT/EP2021/060452
(87) Internationale Veröffentlichungsnummer: WO 2021/228523

(56) Entgegenhaltungen:
- EP-A1- 2 796 753
- EP-A1- 3 392 533
- EP-B1- 2 796 753
- EP-B1- 3 392 533

## Beschreibung

Die vorliegende Erfindung betrifft eine Hochdruckdichtungsanordnung zur radialen Abdichtung eines Behälterverschlusses eines Hochdruckbehälters einer Hochdruckanlage sowie eine entsprechende Hochdruckanlage. Ferner betrifft die Erfindung die Verwendung einer Hochdruckdichtungsanordnung.

### STAND DER TECHNIK

Während einer Hochdruckbehandlung von Produkten werden diese Produkte in einem Hochdruckbehälter, insbesondere einer Hochdruckkammer von einem Hochdruckmedium beaufschlagt und unter einem Druck von bis zu 10.000 bar behandelt. Die Anwendungen von hohen Drücken über 500 bar oder sehr hohen Drücken bis 10.000bar üben besonders auch auf die Dichtungen, insbesondere die Hochdruckdichtungen, welche beispielsweise zwischen dem Hochdruckbehälter und dem Behälterverschluss (Behälterdeckel etc.) angeordnet sind, enorme Kräfte, Druckspannungen, Zugspannung usw. aus. Insbesondere führt der Druckaufbau zu einer Verkleinerung des Volumens der Hochdruckdichtung während sich zeitgleich auch der Einbauraum der Hochdruckdichtung, also der Raum, in welchem die Hochdruckdichtung angeordnet ist, vergrößert. Um diese Veränderungen auszugleichen bzw. zu kompensieren, muss die Hochdruckdichtung ein entsprechendes Dehnungsverhalten, insbesondere eine entsprechende Deformations-Kinematik aufweisen. Dabei werden diese Hochdruckdichtungen auch hohen Belastungsfrequenzen ausgesetzt. Die genannten Hochdrücke führen jedoch auch beim Hochdruckbehälter und beim Behälterverschluss selbst zu erheblichen Dehnungen oder Stauchungen, welche wiederum zu unerwünschter Bildung von Spalten, Fugen oder anderen Öffnungen führen, in welche wiederum die Hochdruckdichtung unvorteilhaft hineinkriechen bzw. sich hineinbewegen kann. Durch ein derartiges Einschieben der Hochdruckdichtung in ungewollt gebildete Öffnungen, kann es unvorteilhaft auch zu dauerhaften Beschädigungen der Hochdruckdichtung kommen, sodass diese entsprechend ausgetauscht werden müssen.

In der DE102017215193A1 ist eine Rotationsdichtungsanordnung für Hochdruckanwendungen mit einem Stützring aus einem zähelastisch verformbaren Material beschrieben. Der Dichtring liegt an der abzudichtenden Fläche dynamisch dichtend. Ein gummielastisch verformbares Vorspannelement, dass zwischen der Dichtungshaltestruktur des einen Maschinenteils und dem Stützring angeordnet ist, um den Dichtring über den Stützring in einer zur Dichtfläche orthogonal ausgerichteten Vorspannrichtung gegen die Dichtfläche vorzuspannen, ist ebenfalls angeordnet. Bei Aufbringen des Druckes wird der Stützring mit seinem niederdruckseitigen Stützschenkel zur Dichtfläche hinbewegt und mit seinem hochdruckseitigen Stützschenkel von der Dichtfläche abgehoben. Damit findet hier eine Verkippung des Stützringes und gleichzeitig auch des Dichtringes statt. Etwaige entstehende ungewollte Öffnungen, Spalten etc. während der Druckbeaufschlagung können jedoch mit einer derartigen - bei vornehmlich Wellen angeordneten - Dichtungen nicht geschlossen, insbesondere nicht abgedichtet werden.

Auch in der EP2492551A1 ist eine hydrodynamische Rotationsdichtung gezeigt, welche zwischen einer ersten Maschinenkomponente, wie einer Welle, und einer zweiten Maschinenkomponente angeordnet ist. Die ringförmige Rotationsdichtung weist dabei flexible Körperlippen sowie einen Energizer auf, mit denen die gewünschte Dichtung erzielt werden soll. Bei derartigen Dichtungskonzepten ist es nicht erforderlich aufgrund von Hochdrücken entstehende Öffnungen und Spalte abzudichten, sondern vielmehr im wesentlichen konstante Systeme langfristig abzudichten.

In der DE112016005723T5 ist eine Dichtungsvorrichtung für Hochdruck-Hochtemperatur-Anwendungen beschrieben. Die Dichtungsvorrichtung dient dabei vornehmlich dazu einen ringförmigen Raum abzudichten, innerhalb welchem ein Dichtungsring angeordnet ist. Der Querschnitt der Dichtungsringe dehnt sich lateral bei Druckbeaufschlagung aus, um eine Kontaktspannung auf jedes der konzentrisch angeordneten Elemente auszuüben. Diese laterale Ausdehnung führt wieder zu erhöhten Belastungen innerhalb der Materialstruktur des Dichtungsringes und zu einem bekannten frühzeitigen Verschleiß.

EP3392533A offenbart einen Dichtungsring gemäß der Präambel von Anspruch 1.

Die begrenzte Lebensdauer hochbelasteter Hochdruckdichtungen verursacht hohe Prozesskosten aufgrund frühzeitigem Austausch, verbunden mit Anlagenstillständen pro Prozesszyklus. Gleichzeitig sollen jedoch die verwendeten Dichtungen hinsichtlich deren Ausgestaltung und des verwendeten Materials kostengünstig sein.

### OFFENBARUNG DER ERFINDUNG

Es ist daher die Aufgabe der vorliegenden Erfindung, die voranstehend beschriebenen Nachteile bei einer Hochdruckdichtungsanordnung zur radialen Abdichtung eines Behälterverschlusses eines Hochdruckbehälters einer Hochdruckanlage zumindest teilweise zu beheben. Insbesondere ist es die Aufgabe der vorliegenden Erfindung eine Hochdruckdichtungsanordnung sowie eine Hochdruckanlage mit einer Hochdruckdichtungsanordnung zu schaffen, die auf einfache und kostengünstige Art und Weise die Lebensdauer von Dichtungen, insbesondere Hochdruckbehälterdichtungen verbessert bzw. erhöht sowie eine hinreichende Abdichtung; vorteilhaft auch bei einer ungewünschten Spaltbildung zwischen Behälterverschluss und Hochdruckbehälter ermöglicht.

Die voranstehende Aufgabe wird gelöst durch eine Hochdruckdichtungsanordnung zur radialen Abdichtung eines Behälterverschlusses eines Hochdruckbehälters mit den Merkmalen des Anspruchs 1 sowie durch eine Hochdruckanlage mit einer entsprechenden Hochdruckdichtungsanordnung mit den Merkmalen gemäß Anspruch 8. Ferner wird die voranstehende Aufgabe gelöst durch eine Verwendung einer Hochdruckdichtungsanordnung mit den Merkmalen gemäß Anspruch 11. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Hochdruckdichtungsanordnung beschrieben sind, selbstverständlich auch im Zusammenhang mit der erfindungsgemäßen Hochdruckanlage und der Verwendung der Hochdruckdichtungsanordnung und jeweils umgekehrt, so dass bezüglich der Offenbarung zu den einzelnen Erfindungsaspekten stets wechselseitig Bezug genommen wird beziehungsweise werden kann.

Die erfindungsgemäße Hochdruckdichtungsanordnung dient zur Abdichtung, insbesondere zur radialen Abdichtung eines Behälterverschlusses eines Hochdruckbehälters einer Hochdruckanlage, wobei der Behälterverschluss in einem zylindrischen Abschnitt des Hochdruckbehälters angeordnet ist. Der Behälterverschluss kann dabei am Außenumfang des Hochdruckbehälters anliegen, in dem der Behälterverschluss auf und teilweise über ein distales Ende des Behälterverschlusses gestülpt ist. Oder der Behälterverschluss liegt an einem Innenumfang des Hochdruckbehälters an, indem der Behälterverschluss zumindest abschnittsweise in den Hochdruckbehälter, insbesondere in einen zylindrischen Abschnitt des Hochdruckbehälters eingebracht ist. Demzufolge ist eine Abdichtung der Kontaktflächen zwischen dem Behälterverschluss und dem Hochdruckbehälter, insbesondere zumindest in radialer Richtung oder wenigstens abschnittsweise auch in axialer Richtung, ausgehend von der Mittellinie eines im Wesentlichen zylindrischen Hochdruckbehälters, erforderlich. Da es bei einer Druckbeaufschlagung des Hochdruckbehälters zu einer Deformierung, insbesondere einer Aufweitung des Hochdruckbehälters kommt, entsteht zwischen diesem Hochdruckbehälter und dem Behälterverschluss ein Spalt, welcher sich zumindest in radialer Richtung ausdehnt. Die erfindungsgemäße Hochdruckdichtungsanordnung dient dazu diesen Spalt insbesondere in radialer Richtung abzudichten und dient demnach auch als radiale Hochdruckdichtungsanordnung. Die erfindungsgemäße Hochdruckdichtungsanordnung weist zumindest einen Dichtungsring mit einer sich zumindest axial (und auch in Umfangsrichtung) erstreckenden Innenumfangsfläche und einer sich zumindest axial (und auch in Umfangsrichtung) erstreckenden Außenumfangsfläche sowie einer sich zwischen der Innenumfangsfläche und der Außenumfangsfläche zumindest radial, also in Querrichtung (und auch in Umfangsrichtung) erstreckenden Stirnfläche und einer der Stirnfläche gegenüberliegenden sich zwischen der Innenumfangsfläche und der Außenumfangsfläche zumindest radial, also in Querrichtung (und auch in Umfangsrichtung) erstreckenden Rückenfläche zur Ermöglichung der Abdichtung und Anlage an ein Dichtungsringgegenüber auf. Insbesondere die Rückenfläche dient vorteilhaft zur Ermöglichung einer Abdichtung zwischen dem Hochdruckbehälter und dem Behälterverschluss. Zudem ist die Rückenfläche des Dichtungsringes erfindungsgemäß zumindest abschnittsweise axial, also in Längsrichtung betrachtet, nach innen oder nach außen gewölbt bzw. gekrümmt bzw. gebogen und weist insbesondere eine konvexe Wölbung oder konkave Wölbung (Form) auf, welche sich vorteilhaft entlang der Umfangsrichtung, also umlaufend erstreckt. Die Krümmung / Wölbung der Rückenfläche bewirkt, dass während einer Beaufschlagung des Hochdruckbehälters mit Hochdruck der Dichtungsring derart im Dichtungsmaterial verteilte Dehnungsbewegungen aufweist, dass keine hohen lokalen Spitzenbelastungen entstehen, wodurch vorteilhaft die Lebensdauer des Dichtungsringes, insbesondere dessen durchlaufende Druck-Zyklen erhöht werden. Vorteilhaft ermöglicht die Krümmung / Wölbung der Rückenfläche eine Deformierung im Sinne einer Rückwölbung der Kantenbereiche (Flanken) der Rückenfläche bei Vorliegen einer konvexen Wölbung oder der Vorwölbung des mittleren Dellentalbereichs der Rückenfläche bei Vorliegen einer konkaven Wölbung bzw. Delle. Vorteilhaft ist, dass eine materialermüdende Dehnung, insbesondere radiale Dehnung des Dichtungsringes, wie diese aus dem allgemeinen Stand der Technik hinreichend bekannt ist, deutlich reduziert wird. Die Rückenfläche liegt vorteilhaft nach der Druckbeaufschlagung des Hochdruckbehälters derart an einem Dichtungsringgegenüber an, dass vorteilhaft auch ein während der Druckbeaufschlagung ungewollt entstehender Spalt abgedichtet ist. Als Dichtungsringgegenüber dient dabei beispielsweise eine Seitenfläche eines Einbauraumes zur Aufnahme des Dichtungsringes oder auch eine Seitenfläche eines Stützringes einer ebenfalls im Einbauraum angeordneten Stützringanordnung, wie nachfolgend noch detaillierter beschrieben.

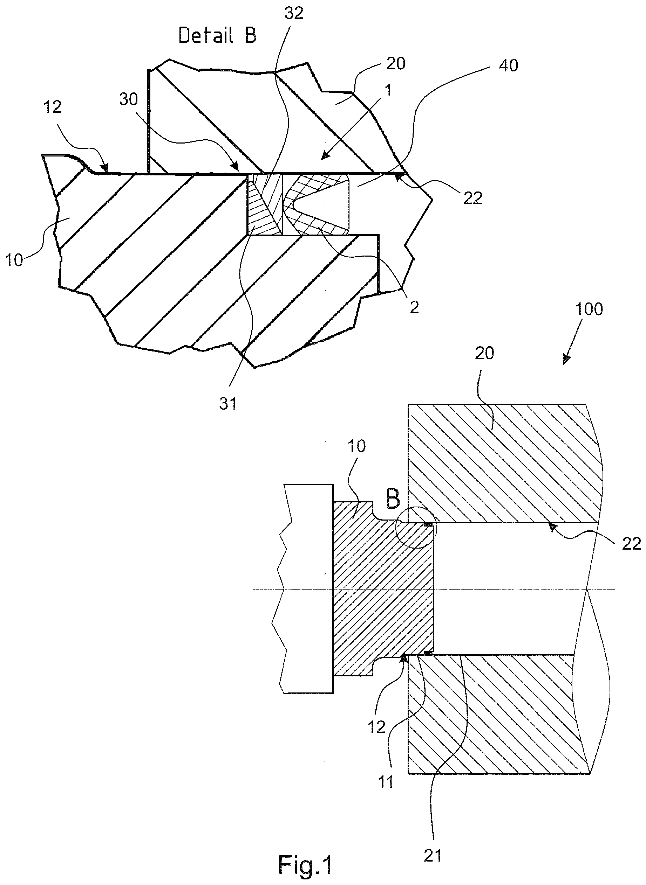

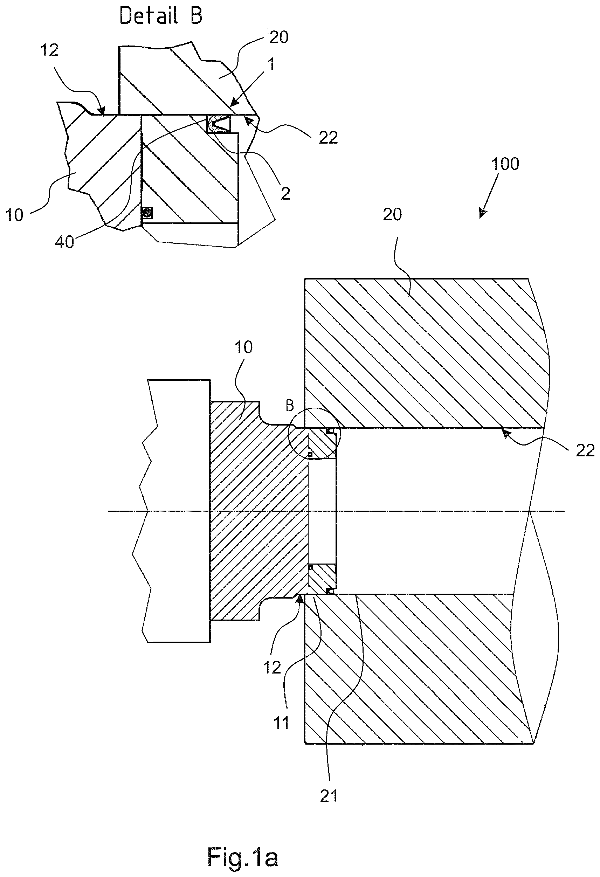

Gemäß einer Weiterentwicklung der Erfindung weist die Hochdruckdichtungsanordnung eine Stützringanordnung umfassend wenigstens einen Stützring auf. Der Stützring kontaktiert vorteilhaft die Rückenfläche des Dichtungsringes wenigstens abschnittsweise. Es ist auch denkbar, dass die Hochdruckdichtungsanordnung eine Stützringanordnung umfassend wenigstens zwei Stützringe, nämlich einen äußeren Stützring und einen inneren Stützring aufweist, wobei beide Stützringe einander kontaktierend angeordnet sind und zumindest der innere Stützring die Rückenfläche des Dichtungsringes wenigstens abschnittsweise kontaktiert. Eine Stützringanordnung für Hochdruckdichtungen ist beispielsweise in der EP2805087B1 beschrieben, deren Inhalt hiermit vollumfänglich in Anspruch genommen wird. Die Stützringanordnung dient vorteilhaft zur Abstützung sowie dem Schutz des Dichtungsringes, insbesondere um eine etwaige Beschädigung des Dichtungsringes durch Extrusion von Dichtungsmaterials in einen beim Druckaufbau entstehenden Spalte zu verhindern. Vorteilhaft weist die Stützringanordnung ein Material, wie PTFE (Polytetrafluorethylen) oder anderen Hochleistungskunststoffen oder Metalllegierungen aus zum Beispiel Titan oder Kupfer auf. Es ist auch denkbar, dass bei Vorliegen von zwei oder mehr Stützringen der Stützringanordnung jeder der Stützringe aus einem anderen Material gefertigt ist. Der wenigstens eine Stützring weist beispielsweise einen rechteckigen oder trapezförmigen Querschnitt auf. Bei Vorliegen von zwei oder mehr Stützringen pro Stützringanordnung weisen die Stützringe vorteilhaft eine aufeinander abgestimmte geometrische Form auf, welche es ermöglicht die Stützringe abstützend aneinander anzuordnen und gegebenenfalls ein aneinander vorbei Gleiten bei Auftreten der Einbauraumvergrößerung bei Druckbeaufschlagung zu ermöglichen. Es ist auch denkbar, dass einer der Stützringe oder der zumindest eine Stützring durch den Behälterverschluss selbst gebildet ist und folglich ein Bestandteil des Behälterverschlusses darstellt. Im Zusammenhang mit der Hochdruckbehandlung von Lebensmitteln oder andere isostatischen Hochdruckanwendungen, bei denen der Behälterverschluss häufig aus dem Hochdruckbehälter herausgenommen und auch wiedereingeführt werden muss, ist es vorteilhaft die Stützringanordnung derart zu gestalten, dass diese im drucklosen Zustand ein hinreichendes Spiel und somit einen hinreichenden Spalt zur Hochdruckbehälterinnenwand und/oder zum Behälterverschluss aufweist. In der später detailliert beschriebenen Figur 1 ist eine entsprechende Anwendungssituation dargestellt. In diesem Zusammenhang ist eine Dichtungsringgeometrie mit konvexer Rückwand besonders vorteilhaft, weil erst bei einem höheren Druckniveau die Rückwölbung der Rückenfläche des Dichtungsringes gegen die entsprechende Gegenfläche der Stützringanordnung abgeschlossen ist, insbesondere bei einem Druckniveau bei dem der spielbedingte Spalt bereits geschlossen ist. Dadurch wird die Extrusion von Dichtungsmaterial wirkungsvoll verhindert.

Gemäß einer Weiterentwicklung der Erfindung ist der Dichtungsring ein C-Profil Dichtungsring, auch Nutring-Dichtung genannt, dessen Stirnfläche eine erste Dichtungslippe und eine zweite Dichtungslippe sowie ein Lichtmaß bzw. eine Lichte oder ein lichtes Maß, welches zwischen den Dichtungslippen ausgebildet ist, aufweist. Die Größe bzw. Ausprägung des Lichtmaßes kann unterschiedlich sein und ist nicht auf eine definierte Größe bzw. Ausprägung eingeschränkt. Vorteilhaft ermöglicht die Lichte einen biegeweichen Grund für die oben beschriebenen Dichtlippen, sodass die Profilhöhe des Dichtungsringes im Bereich der (für die Fluiddichtigkeit verantwortlichen) Dichtlippen ein großes Übermaß zum Einbauraum der Dichtung aufweisen kann und folglich ein prozesssicheres Abdichten des Hochdruckbehälters gewährleistet ist. Das gewünschte Deformationsverhalten der Rückenfläche des Dichtungsringes während der Druckbeaufschlagung wird dabei vorteilhaft nicht behindert. Das bedeutet, dass anstelle einer ansonsten starken Dehnung, insbesondere Radialdehnung der Rückenfläche des Dichtungsringes diese sich nun, wie oben beschrieben, ungehindert hin zu einer planaren Rückenfläche zurückwölbt bzw. aufwölbt.

Es ist alternativ denkbar, dass die Stirnfläche des Dichtungsringes zumindest abschnittsweise axial (also in Längsrichtung betrachtet) nach innen oder nach außen gewölbt bzw. gekrümmt bzw. gebogen ist, insbesondere eine konvexe oder konkave Wölbung (Form) aufweist. Es ist zudem denkbar, dass auch die Dichtungslippen selbst zusätzlich eine sich in axialer Richtung betrachtete konvexe oder konkave Wölbung oder Struktur aufweisen. Diese konvexen oder konkaven Wölbungen der Stirnfläche und/oder der Dichtungslippen selbst erstrecken sich vornehmlich entlang der Umfangsrichtung. Die Ausgestaltung der Stirnfläche des Dichtungsringes trägt vorteilhaft dazu bei die gewünschte Deformierung / Deformation der Rückenfläche des Dichtungsringes zu unterstützen, wie bereits oben genannt. Zudem ist die Ausgestaltung der Stirnfläche des Dichtungsringes auch abhängig vom Einsatzgebiet der Hochdruckdichtungsanordnung, der Einbaulage usw.

Es ist des Weiteren denkbar, dass die Stirnfläche des Dichtungsringes kongruent zur Rückenfläche des Dichtungsringes ausgebildet ist, insbesondere, dass die Stirnfläche eine konvexe Wölbung bzw. Krümmung aufweist, welche kongruent zur konvexen Wölbung bzw. Krümmung der Rückenfläche ausgebildet ist. Das bedeutet, dass die Stirnfläche und die Rückenfläche des Dichtungsringes eine vergleichbare, insbesondere identische Ausformung aufweisen. Dadurch werden vorteilhaft die Herstellkosten des Dichtungsringes reduziert und dessen Stabilität erhöht.

Gemäß einer alternativen Ausführungsform ist es denkbar, dass die Stirnfläche des Dichtungsringes inkongruent, insbesondere gegensätzlich zur Rückenfläche des Dichtungsringes ausgebildet ist, insbesondere, dass die Stirnfläche eine konkave Wölbung, insbesondere Delle (Vertiefung) und die Rückenfläche eine konvexe Wölbung aufweisen. Es ist auch denkbar, dass die Rückenfläche eine konkave Wölbung, insbesondere Delle (Vertiefung) und die Stirnfläche eine konvexe Wölbung aufweisen. Eine derartige Ausgestaltung des Dichtungsringes ermöglicht vorteilhaft ein einfaches und prozesssicheres Deformieren des Dichtungsringes im Bereich der Rückenfläche derart, dass die Krümmung, Delle oder anderweitig entsprechende Verformung reduziert, vorteilhaft vollständig aufgehoben wird. Unter einer Reduzierung bzw. einer Aufhebung der genannten Deformierung wird eine Erzeugung einer sich zumindest in Querrichtung (und in Umfangsrichtung) erstreckenden im Wesentlichen planaren Rückenfläche des Dichtungsringes verstanden. Eine im Wesentlichen planare Rückenfläche kann im Rahmen der Erfindung eine geringfügige, für die prozesssichere Abdichtung nicht relevante Deformierung oder Wellung etc. aufweisen. Eine erzeugte planare Rückenfläche ermöglicht vorteilhaft zudem das hinreichende Anlegen etwaiger Dichtlippen (sofern vorhanden) und/oder der Dichtungsseiten, wie der Außenumgangsfläche, um eine hinreichende Abdichtung zwischen dem Hochdruckbehälter und dem Behälterverschluss, ermöglicht durch das Anlegen der Rückenfläche an ein entsprechendes Dichtungsringgegenüber, wie eine entsprechende Wandung des Einbauraumes oder einen entsprechend positionierten Stützring, zu erzeugen. Dies wird nachfolgend noch ausführlicher beschrieben.

Gemäß einer Ausführungsform der Erfindung ist zumindest die Innenumfangsfläche oder die Außenumfangsfläche, in Längsrichtung (axial) betrachtet, planar ausgebildet. Eine planare Ausbildung bedeutete hier im Rahmen der Erfindung, dass die benannte Fläche, insbesondere deren Oberfläche, keine konvexe oder konkave Wölbung aufweist. Demzufolge ist es auch möglich, dass beide Flächen, nämlich die Innenumfangsfläche und die Außenumfangsfläche, zumindest in Längsrichtung (axial) betrachtet, planar ausgebildet sind. Eine derartige Ausbildung des Dichtungsringes ermöglicht eine einfache und kostengünstige Herstellung des Dichtungsringes. Es ist jedoch auch denkbar, dass zumindest die Innenumfangsfläche oder die Außenumfangsfläche eine konvexe Wölbung oder eine konkave Wölbung, insbesondere konkave Delle aufweist. Das bedeutet, dass entweder die Innenumfangsfläche eine konvexe Wölbung aufweist, während die Außenumfangsfläche planar ausgebildet oder konvex gewölbt oder konkav gewölbt bzw. gekrümmt ist, oder vice versa.

Es ist ebenfalls denkbar, dass die Stirnfläche wenigstens einen Vorsprung, wie eine Nase, Zipfel, Ausläufer etc. aufweist. Dieser wenigstens eine Vorsprung erstreckt sich vorteilhaft axial, also in Längsrichtung und/oder radial, also in Querrichtung nach außen in Richtung der Außenumfangsfläche betrachtet oder axial und/oder radial nach innen in Richtung der Innenumfangsfläche betrachtet. Auch ist es denkbar, dass die Stirnfläche zwei derartige Vorsprünge aufweist, wobei sich einer der Vorsprünge axial und/oder radial nach außen in Richtung der Außenumfangsfläche betrachtet erstreckt, während sich der andere der Vorsprünge axial und/oder radial nach innen in Richtung der Innenumfangsfläche betrachtet, erstreckt. Vorteilhaft ergibt sich hierdurch lokal eine erhöhte Andruckkraft, so dass insbesondere bei kleinen Drücken die Anfangsdichtheit verbessert ist. Bei höheren Drücken sind die Dichtungen vorteilhaft selbstverstärkend dichtend.

Gemäß einem weiteren (zweiten) Aspekt der Erfindung ist eine Hochdruckanlage zur Hochdruckbehandlung eines Produktes beansprucht. Die Hochdruckanlage weist einen Hochdruckbehälter sowie einen den Hochdruckbehälter verschließenden Behälterverschluss auf. Der Behälterverschluss weist einen ringförmigen Einbauraum zur Aufnahme einer Hochdruckdichtungsanordnung, wie zuvor beschrieben, auf. Die Hochdruckanlage weist die Hochdruckdichtungsanordnung, wie zuvor beschrieben, zur Abdichtung eines zumindest während eines mit Hochdruck beaufschlagten Zustandes des Hochdruckbehälters entstehenden Spaltes zwischen dem Hochdruckbehälter und dem Behälterverschluss auf. Als Hochdruckanlage ist dabei beispielsweise eine HPP - Hochdruckkonservierungs-Anlage für Lebensmittel - zu verstehen, bei welcher bekannter Weise Hochdrücke von bis zu 6000bar, teils sogar noch höher, als üblicher Prozessdruck eingesetzt werden. Beim Aufbringen eines derartigen hohen Druckes während der Produktbehandlung eines Produktes, wie eines Lebensmittels, innerhalb des mit dem Behälterverschluss verschlossenen Hochdruckbehälters, kommt es zu einer für die Hochdruckdichtungsanordnung zwischen Behälterverschluss und Hochdruckbehälter ungünstiger Aufweitung des Einbauraumes und einer dadurch entstehenden Spaltbildung. Zeitgleich verringert sich das Volumen der innerhalb des Einbauraumes angeordneten Hochdruckdichtungsanordnung bzw. des verwendeten Dichtungsringes. In grundlegend bekannter Weise versucht der Dichtungsring dieser Volumenverringerung entgegen zu wirken, indem dieser sich immer weiter innerhalb des ihm zur Verfügung stehenden Raumes ausweitet bzw. ausdehnt. Diese Ausdehnung verursacht jedoch wiederum eine Ermüdung des Dichtungsringmaterials mit daraus resultierender Beschädigung des Dichtungsringmaterials, wodurch dieser kontinuierlich an Dichtwirkung verliert und ausgetauscht werden muss. Demgegenüber erfüllt die erfindungsgemäße Hochdruckdichtungsanordnung die erforderliche Aufweitung zur Sicherstellung der Dichtwirkung vorteilhaft vorranging durch eine Deformierung, insbesondere Rückwölbung der Rückenfläche des Dichtungsringes.

Gemäß einer Ausführungsform weist der Einbauraum eine sich radial (also in Querrichtung) sowie in Umfangsrichtung des Behälterverschlusses erstreckende Seitenfläche und eine sich axial (also in Längsrichtung) sowie in Umfangsrichtung des Behälterverschlusses erstreckende Bodenfläche auf. Die Positions- und Richtungsbezeichnungen basieren auf der Betrachtung einer Mittelachse eines zylinderförmigen Abschnittes des Behälterverschlusses. Vorteilhaft weist der Behälterverschluss einen zylinderförmigen Abschnitt auf, welcher in einen entsprechenden zylinderförmigen Abschnitt des Hochdruckbehälters eingreift. Die Innenumfangsfläche des Dichtungsringes ist zu der Bodenfläche des Einbauraumes und die Rückenfläche des Dichtungsringes zu der Seitenfläche des Einbauraumes ausgerichtet. Es ist denkbar, dass die Rückenfläche des Dichtungsringes die Seitenfläche des Einbauraumes - im drucklosen Zustand - zumindest abschnittsweise kontaktiert, insbesondere, wenn der Dichtungsring ohne Stützringanordnung innerhalb des Einbauraumes angeordnet ist. Ist eine Stützringanordnung oder zumindest ein Stützring innerhalb des Einbauraumes angeordnet, so ist diese/dieser vorteilhaft zwischen dem Dichtungsring und der Seitenfläche des Einbauraumes positioniert. Demnach ist es anderenfalls auch denkbar, dass bei einer Anordnung zumindest eines Stützringes innerhalb des Einbauraumes der Dichtungsring, insbesondere die Rückenfläche des Dichtungsringes, den Stützring - im drucklosen Zustand - zumindest abschnittsweise kontaktiert.

In einem drucklosen Zustand des Hochdruckbehälters ist der Dichtungsring derart im Einbauraum angeordnet, dass zwischen dem Dichtungsring und der Seitenfläche des Einbauraums zumindest abschnittsweise ein Hohlraum ausgebildet ist. Entsprechendes gilt für die oben genannte Anordnung eines Stützringes innerhalb des Einbauraums. In diesem Falle ist zwischen dem Dichtungsring und dem Stützring zumindest abschnittweise ein Hohlraum ausgebildet. Dieser Hohlraum wird im Wesentlichen aufgrund der vorliegenden konkaven oder konvexen Struktur bzw. Wölbung bzw. Krümmung der Rückenfläche des Dichtungsringes verursacht. Das bedeutet, das beispielsweise bei Vorliegen einer konvexen Wölbung diese Wölbung die Seitenfläche des Einbauraumes oder den Stützring kontaktiert, während die Endbereiche, insbesondere die Flanken dieser Wölbung von der Seitenfläche des Einbauraumes bzw. von dem Stützring beabstandet angeordnet sind und dadurch ein Hohlraum erzeugt ist.

Bei einer Ausgestaltung mit einer Stützringanordnung aufweisend zwei Stützringe, nämlich einem innerhalb des Einbauraumes angeordneten äußeren Stützringes und eines innerhalb des Einbauraumes angeordneten inneren Stützringes, findet beispielsweise folgende Anordnung statt. Der äußere Stützring liegt an der Seitenfläche des Einbauraumes an und kontaktiert die Seitenfläche zumindest abschnittsweise, wobei der innere Stützring zwischen dem äußeren Stützring und dem Dichtungsring angeordnet ist. Die Innenumfangsfläche des Dichtungsringes ist zu der Bodenfläche des Einbauraumes und die Rückenfläche des Dichtungsringes ist zu dem inneren Stützring ausgerichtet. Das bedeutet, dass in einem drucklosen Zustand des Hochdruckbehälters der Dichtungsring derart im Einbauraum angeordnet ist, dass zwischen dem Dichtungsring und dem inneren Stützring ein Hohlraum, wie oben bereits beschrieben, ausgebildet ist.

Es ist grundlegend bekannt, dass Stützringe erst ab einem definierten Druck einen durchgehenden Kontakt zur Wandung des Hochdruckbehälters gewährleisten. Dank der konvexen oder konkaven Krümmung bzw. Wölbung bzw. Bogenform der Rückenfläche des Dichtungsringes findet bei einer Druckbeaufschlagung, wie oben genannt, eine "Rückwölbung" der Rückenfläche mit sehr geringer Dehnung des Dichtungsringes statt. Hierdurch kommt es ebenfalls erst ab oben genanntem definiertem Druck zu einem Anlegen der Rückenfläche des Dichtungsringes an den Stützring, wodurch vorteilhaft einer Erosion des Dichtungsringes, insbesondere dessen Flankenbereiche aufgrund einer Extrusion von Dichtungsringmaterial in den entstehenden Spalt hinein, entgegengewirkt wird. Dieser Erosion wird vorteilhaft auch ohne Verwendung eines Stützringes oder einer Stützringanordnung entgegengewirkt, da das "Rückwölben" der Rückenfläche einer Extrusion des Dichtungsmaterials in den entstehenden Spalt hinein positiv entgegenwirkt.

Vorteilhaft ist die Länge der Rückenfläche derart bemessen, dass diese, insbesondere unter Berücksichtigung der Kompression des Dichtungsmaterials und der Aufweitung des Dichtungsraumes bzw. Einbauraumes, bei Anliegen des Hochdruckes der Gegenfläche des Dichtungsraumes, insbesondere des aufgeweiteten Einbauraumes entspricht.

Bei der beschriebenen Hochdruckanlage ergeben sich sämtliche Vorteile, die bereits zu einer Hochdruckdichtungsanordnung gemäß dem ersten Aspekt der Erfindung beschrieben worden sind.

Gemäß einem weiteren (dritten) Aspekt der Erfindung ist eine Verwendung einer Hochdruckdichtungsanordnung, wie zuvor beschrieben, zur Abdichtung eines Spaltes zwischen einem Behälterverschluss und einem Hochdruckbehälter einer zuvor beschriebenen Hochdruckanlage beansprucht. Der Dichtungsring deformiert sich bei einer Beaufschlagung des mit dem Behälterverschlusses verschlossenen Hochdruckbehälters mit Druck, insbesondere Hochdruck, derart, dass sich die Rückenfläche des Dichtungsringes derart an ein Dichtungsringgegenüber, wie beispielsweise einer Seitenfläche eines Einbauraumes anlegt, dass ein zwischen diesem Dichtungsringgegenüber, insbesondere der Seitenfläche des Einbauraumes und der Rückenfläche des Dichtungsringes bestehender Hohlraum zumindest reduziert wird, indem die Flanken bei einer konvexen Wölbung der Rückenfläche in Richtung des Dichtungsringgegenübers, insbesondere der Seitenfläche des Einbauraumes deformiert werden oder indem eine Vertiefung (Dellental) bei einer konkaven Wölbung, insbesondere einer konkaven Delle der Rückenfläche in Richtung des Dichtungsringgegenübers, insbesondere der Seitenfläche des Einbauraumes deformiert wird. Der Dichtungsring, insbesondere die Rückenfläche des Dichtungsringes legt sich folglich an das Dichtungsringgegenüber, wie die Seitenfläche des Einbauraumes an, indem diese Rückenfläche eine zumindest nahezu planare Fläche ausbildet. Dabei wird vorteilhaft eine vollständige Abdichtung zwischen dem Hochdruckbehälter und dem Behälterverschluss ermöglicht und gleichzeitig ein für das Dichtungsmaterial des Dichtringes ungünstiges überhöhtes Dehnungsverhalten reduziert. Gleichzeitig wird dadurch ein Extruieren von Dichtungsringmaterial, insbesondere dessen Flankenbereiche in den entstehenden Spalt vermieden.

Bei Vorliegen einer Stützringanordnung mit einem Stützring (oder eine Vielzahl, insbesondere zwei Stützringen) innerhalb des Einbauraumes legt sich die Rückenfläche des Dichtungsringes derart an den (inneren) Stützring als Dichtungsringgegenüber an, dass ein zwischen dem (inneren) Stützring und dem Dichtungsring bestehender Hohlraum reduziert, insbesondere ausgefüllt wird, indem die Flanken bei einer konvexen Wölbung der Rückenfläche in Richtung des (inneren) Stützringes deformiert werden oder indem eine Vertiefung (Dellental) bei einer konkaven Wölbung, insbesondere einer konkaven Delle der Rückenfläche in Richtung des (inneren) Stützringes deformiert wird.

Bei der beschriebenen Verwendung einer Hochdruckdichtungsanordnung ergeben sich sämtliche Vorteile, die bereits zu einer Hochdruckdichtungsanordnung gemäß dem ersten Aspekt der Erfindung sowie zu einer Hochdruckanlage gemäß dem zweiten (weiteren) Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen einer erfindungsgemäßen Hochdruckdichtungsanordnung sowie ein Ausschnitt aus einer Ausführungsform einer erfindungsgemäßen Hochdruckanlage, sowie deren Verwendung werden nachfolgend anhand von Zeichnungen näher erläutert. Es zeigen jeweils schematisch:
- Figur 1: in einer Schnittdarstellung ein Ausschnitt einer Ausführungsform einer erfindungsgemäßen Hochdruckanlage mit Hochdruckbehälter und Behälterverschluss sowie im Detail B eine Ausführungsform einer erfindungsgemäßen Hochdruckdichtungsanordnung,
- Figur 1a: in einer Schnittdarstellung ein Ausschnitt einer weiteren Ausführungsform einer erfindungsgemäßen Hochdruckanlage mit Hochdruckbehälter und Behälterverschluss sowie im Detail B eine weitere Ausführungsform einer erfindungsgemäßen Hochdruckdichtungsanordnung,
- Figur 2, 3, 4: in einer Schnittdarstellung eine Ausführungsform einer aus dem allgemeinen Stand der Technik bekannten Hochdruckdichtungsanordnung und deren Verwendung,
- Figur 5, 6, 7: in einer Schnittdarstellung eine Ausführungsform einer erfindungsgemäßen Hochdruckdichtungsanordnung und deren Verwendung,
- Figur 8: in einer Schnittdarstellung eine weitere Ausführungsform einer erfindungsgemäßen Hochdruckdichtungsanordnung,
- Figur 9: in einer Schnittdarstellung eine weitere Ausführungsform einer erfindungsgemäßen Hochdruckdichtungsanordnung,
- Figur 10: in einer Schnittdarstellung eine Ausführungsform eines Dichtungsringes einer erfindungsgemäßen Hochdruckdichtungsanordnung,
- Figur 11: in einer Schnittdarstellung eine weitere Ausführungsform eines Dichtungsringes einer erfindungsgemäßen Hochdruckdichtungsanordnung,
- Figur 12: in einer Schnittdarstellung eine weitere Ausführungsform eines Dichtungsringes einer erfindungsgemäßen Hochdruckdichtungsanordnung, und
- Figur 13: eine Darstellung der Richtungsbezeichnungen anhand einer Ausführungsform eines Dichtungsringes.

Elemente mit gleicher Funktion und Wirkungsweise sind in den Figuren 1 bis 13 jeweils mit denselben Bezugszeichen versehen. Da der Dichtring gemäß dem allgemeinen Stand der Technik eine zum Dichtungsring gemäß der vorliegenden Erfindung abweichende Wirkungsweise aufweist, werden der Dichtring und der Dichtungsring sowie deren Flächen mit zueinander abweichenden Bezugszeichen gekennzeichnet.

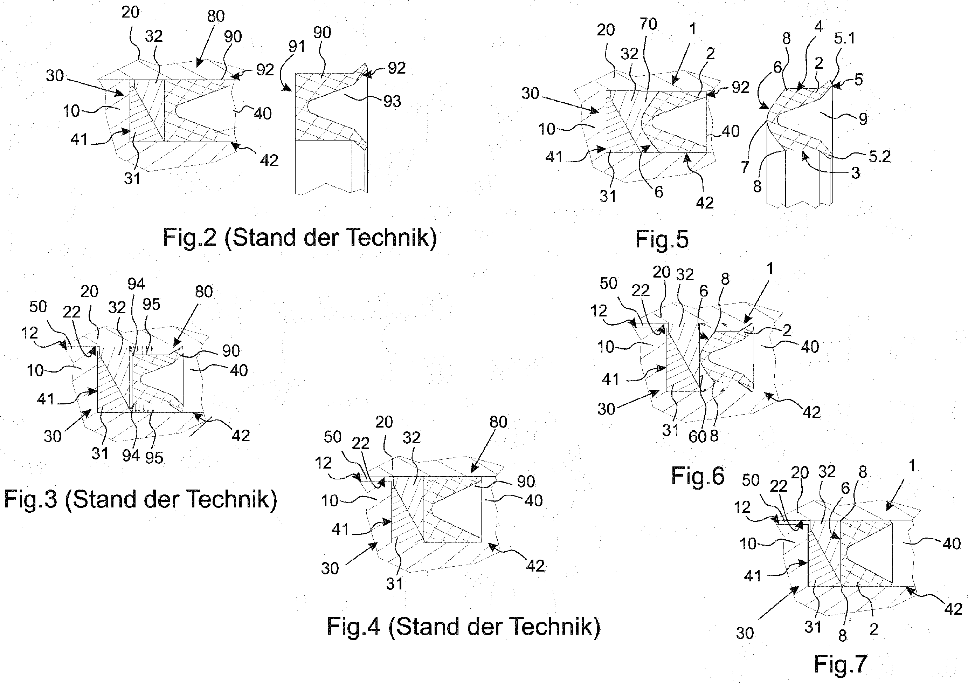

In den Figuren 1 und 1a sind jeweils schematisch in einer Schnittdarstellung ein Ausschnitt einer Ausführungsform einer erfindungsgemäßen Hochdruckanlage 100 mit Hochdruckbehälter 20 und Behälterverschluss 10 sowie im Detail B eine jeweilige Ausführungsform einer erfindungsgemäßen Hochdruckdichtungsanordnung 1 gezeigt. Der Behälterverschluss 10 weist einen zylindrischen Abschnitt 11 auf, welcher in einen zylindrischen Abschnitt 21 des Hochdruckbehälters 20 eingreift. Die Außenumfangswandung 12 des Behälterverschlusses 10 ist dabei koaxial zur Innenwandung 22 des Hochdruckbehälters 20 ausgerichtet und kontaktiert dabei eine Innenwandung 22 des Hochdruckbehälters 20 zumindest abschnittsweise, vorteilhaft vollumfänglich. Der Behälterverschluss 10 weist einen Einbauraum 40 auf, welcher als ringförmige Nut bzw. Aussparung in der Außenumfangswandung 12 ausgebildet ist. Innerhalb des Einbauraumes 40 ist eine Hochdruckdichtungsanordnung 1 angeordnet. Diese Hochdruckdichtungsanordnung 1 weist gemäß der Figur 1a lediglich einen Dichtungsring 2 und gemäß der Figur 1 einen Dichtungsring 2 sowie eine Stützringanordnung 30 auf. Die Stützringanordnung 30, wie in der Figur 1 gezeigt, umfasst hierbei zwei Stützringe, 31, 32, nämlich einen äußeren Stützring 31 und einen inneren Stützring 32. Der innere Stützring 32 ist zwischen dem äußeren Stützring 31 und dem Dichtungsring 2 angeordnet. Wie insbesondere im Detail B der Figur 1 oder der Figur 1a gezeigt, kontaktiert die Außenumfangswandung 12 des Behälterverschlusses 10 die Innenwandung 22 des Hochdruckbehälters 20 im drucklosen Zustand, also in einem Zustand der Hochdruckanlage 100, in welchem der Hochdruckbehälter 20 nicht mit Hochdruck beaufschlagt ist, im Wesentlichen zumindest abschnittsweise vollumfänglich, wobei ein funktionsbedingter (hier nicht gezeigter) Zwischenraum zum Einbringen oder Ausbringen des Behälterverschlusses 10 in bzw. aus dem Hochdruckbehälter 20 zu dessen Schließung bzw. Öffnung vorliegt. Bereits im drucklosen Zustand sorgt die Hochdruckdichtungsanordnung 1, insbesondere der Dichtungsring 2 für eine hinreichende Abdichtung zwischen dem Behälterverschluss 10 und dem Hochdruckbehälter 20. Eine Spaltbildung bei Hochdruckbeaufschlagung wird in den nachfolgenden Figuren 2 bis 7 dargestellt.

In den Figuren 2 bis 4 ist eine aus dem allgemeinen Stand der Technik bekannte Anordnung von Stützringen 31, 32 und Dichtring 90 innerhalb eines Einbauraumes 40 gezeigt. Der Einbauraum 40 weist eine sich vollumfänglich erstreckende, ringförmige Seitenfläche 41 sowie eine sich vollumfänglich erstreckende, ringförmige Bodenfläche 42 auf. Der Einbauraum 40 ist am Behälterverschluss 10 ausgebildet, welcher mit einem zu verschließenden Hochdruckbehälter 20 in Wirkverbindung gebracht wird. Eine Stützringanordnung 30, aufweisend einen äußeren Stützring 31 sowie einen inneren Stützring 32 sind derart in dem Einbauraum 40 angeordnet, dass der äußere Stützring 31 die Seitenfläche 41 des Einbauraumes 40 zumindest teilweise bzw. abschnittsweise kontaktiert. Der innere Stützring 32 ist zwischen dem äußeren Stützring 31 und dem Dichtring 90 positioniert und kontaktiert die planar, insbesondere geradlinig ausgebildete Rückenfläche 91 des Dichtringes 90 (in Querrichtung, radial, betrachtet) vollständig. Der gezeigte Dichtring 90 weist ein C-Profil auf, kann jedoch auch eine andere Profilierung aufweisen. Die der Rückenfläche gegenüberliegende Stirnfläche 92 ist demnach durch ein Lichtmaß 93 unterbrochen. Die Hochdruckdichtungsanordnung 80 liegt gemäß der Figur 2 in einem Ruhezustand vor. Das bedeutet, dass der Hochdruckbehälter 20 nicht mit Hochdruck beaufschlagt ist. Demgegenüber zeigt die Figur 3 eine Spaltbildung zwischen dem Hochdruckbehälter 20 und dem Behälterverschluss 10. Insbesondere erstreckt sich der Spalt 50, welcher aufgrund des Beaufschlagens des Hochdruckbehälters 20 mit Hochdruck entsteht, zwischen der Innenwandung 22 des Hochdruckbehälters 20 und der Außenumfangswandung 12 des Behälterverschlusses 10, zumeist vollumfänglich. Dieser Spalt 50 entsteht im Wesentlichen aufgrund einer "Aufweitung" des Hochdruckbehälters 20, wodurch sich folglich auch der Einbauraum 40 vergrößert. Gleichzeitig sorgt der verwendete Hochdruck auch zu einer Komprimierung des Dichtringes 90. Um dies auszugleichen, muss der Dichtring 90 sich ausdehnen, wie in der Figur 3 gezeigt. Die Ausdehnung 95 führt zu großen Materialspannungen innerhalb des Dichtringes 90. Zudem ist es denkbar, dass bei einem Auftreten des Spaltes 50 Kantenbereiche 94 des Dichtringes 90 in den entstehenden Spalt 50 hineingezogen werden, insbesondere, wenn eine entsprechende (Neu-)Positionierung zumindest eines der Stützringe 31, 32 zu spät erfolgt bzw. verzögert erfolgt. Das führt zu ungewünschter Erosion des Materials des Dichtringes 90 und folglich zu dessen dauerhafter Beschädigung. In diesem Fall muss dann der Dichtring 90 ausgetauscht werden. Im Besten Fall, wie in der Figur 4 gezeigt, dehnt sich der Dichtring 90 hinreichend aus, insbesondere nachdem eine entsprechende (Neu-) Positionierung eines Stützringes 31, 32 erfolgt ist, sodass der entstandene Spalt 50 während der Druckbeaufschlagung entsprechend abgedichtet werden kann.

Im Vergleich dazu zeigen die Figuren 5 bis 7 in einer Schnittdarstellung eine Ausführungsform einer erfindungsgemäßen Hochdruckdichtungsanordnung 1 und deren Verwendung. Die Ausgestaltung des Einbauraumes 40, der Stützringanordnung 30, des Hochdruckbehälters 20 sowie des Behälterverschlusses 10 entsprechen der zu den Figuren 2 bis 4 beschriebenen Ausgestaltung, sodass folglich diese Beschreibung hier entsprechende Anwendung findet. Ein Wesentlicher Unterschied ist der Dichtungsring 2, welcher im Gegensatz zum Dichtring 90 eine konvex gebogene Rückenfläche 6 aufweist. Es ist jedoch auch denkbar, dass die Rückenfläche 6 konkav gebogen bzw. gekrümmt ist, wie in nachfolgenden Ausführungsformen noch genauer dargestellt. Der Dichtungsring 2 weist eine C-Form mit Dichtungslippen 5.1. 5.2, insbesondere einer ersten Dichtungslippe 5.1 und einer zweiten Dichtungslippe 5.2 als Stirnseite 5 auf, welche mittels eines Lichtmaßes 9 voneinander beabstandet sind. Die Figur 5 ist das Pendant zur oben bereits beschriebenen Figur 2, insbesondere hinsichtlich der Einbausituation der Stützringanordnung 30 innerhalb eines Einbauraumes 40 während eines drucklosen Zustandes, insbesondere eines Zustandes, während welchem der Hochdruckbehälter 20 nicht mit Hochdruck beaufschlagt ist. Der ebenfalls im Einbauraum 40 angeordnete Dichtungsring 2 kontaktiert zumindest abschnittweise, insbesondere mit dessen konvexer Wölbung 7 der Rückenfläche 6, den inneren Stützring 32. Die Flanken 8 des Dichtungsringes 2 sind folglich vom inneren Stützring 32 beabstandet, sodass zumindest in diesem Bereich zwischen dem inneren Stützring 32 und den Flanken 8 des Dichtungsringes 2 ein Hohlraum 70 entsteht.

Wie in der Figur 6 gezeigt, wird der Hochdruckbehälter 20 mit einem Hochdruck beaufschlagt, sodass folglich ein unter Druck stehender Hochdruckbehälter 20 vorliegt. Hierbei wird, wie bereits zur Figur 3 beschrieben, ein Spalt 50 zwischen dem Hochdruckbehälter 20 und dem Behälterverschluss 10 erzeugt. Anders, als im beschriebenen allgemeinen Stand der Technik vorherrschend, findet keine sofortige Dehnung des Dichtungsringes 2 statt. Vielmehr deformiert sich der Dichtungsring 2 erst ab Anliegen eines Hochdruckes, bei welchem auch eine Neu-/Um-) Positionierung zumindest eines der Stützringe 31, 32, insbesondere des inneren Stützringes 32 ermöglicht wird. Als Deformierung des Dichtungsringes 2 wird dabei ein Rückwölben 60 oder ein Aufwölben 60 dessen Rückenfläche 6 derart verstanden, dass sich, wie in der Figur 6 gezeigt, die Flanken 8 in Richtung der Stützringanordnung 30 sowie in Richtung der Innenwandung 22 des Hochdruckbehälters 20 bzw. in Richtung Bodenfläche 42 des Einbauraumes 40 bewegen. Dadurch wird vorteilhaft lediglich ein geringes Dehnungsverhalten des Dichtungsringes 2 erzeugt. Zudem wird gleichzeitig auch eine Erosion des Dichtungsringes 2, insbesondere durch eine Extrusion der Flanken 8 in den sich bildenden Spalt 50 reduziert. Nach Beendigung der Deformierung, insbesondere Rückwölbung 60 der Rückenfläche 6 des Dichtungsringes 2, liegt die Rückenfläche 6, wie in der Figur 7 gezeigt, vergleichbar zur Figur 4, an dem inneren Stützring 32 an. Die Rückenfläche 6 weist nun eine im Wesentlichen planare Oberfläche auf.

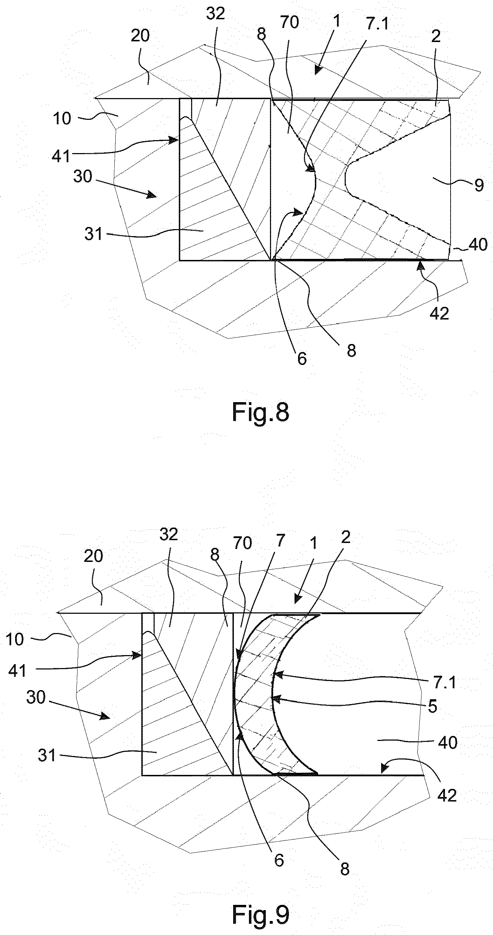

In den Figuren 8 und 9 sind jeweils in einer Schnittdarstellung eine Ausführungsform einer erfindungsgemäßen Hochdruckdichtungsanordnung 1 dargestellt. Die Ausgestaltung des Einbauraumes 40, der Stützringanordnung 30, des Hochdruckbehälters 20 sowie des Behälterverschlusses 10 entsprechen im Wesentlichen den in den Figuren 2 bis 7 erläuterten Ausgestaltungen, sodass diese Erläuterungen hiermit vollumfänglich einbezogen sind und nicht nochmals aufgeführt werden. Abweichend zu den Figuren 2 bis 4 bzw. 5 bis 7 ist jedoch die Ausgestaltung des Dichtungsringes 2, welcher anstelle einer konvexen Wölbung 7, wie zu den Figuren 5 bis 7 gezeigt, eine konkave Wölbung 7.1 bzw. eine konkave Delle 7.1 an dessen Rückenfläche 6 aufweist. Bei Vorliegen eines drucklosen Zustandes, wie in den Figuren 8 und 9 gezeigt, kontaktieren folglich die Flanken 8 des Dichtungsringes 2 den inneren Stützring 32 zumindest abschnittweise, während die konkave Delle 7.1 des Dichtungsringes 2 von diesem inneren Stützring 32 beabstandet ist, wie in der Figur 8 gezeigt. Wird nun der Hochdruckbehälter 20 mit einem Hochdruck beaufschlagt und steht der Hochdruckbehälter 20 folglich unter Druck, bildet sich, wie beispielsweise in der Figur 6 gezeigt, ein Spalt 50 aus und der Dichtungsring 2 erfährt eine Deformierung. Dabei wölbt sich die konkave Delle 7.1 derart zurück, dass diese letztlich ebenfalls den inneren Stützring 31 kontaktiert. Diese Deformierung der Rückenfläche 6 des Dichtungsringes 2 findet vorteilhaft erst ab einem Hochdruckwert statt, bei welchen auch zumindest einer der Stützringe 31, 32, insbesondere der innere Stützring 32 sich derart positioniert, dass der Spalt 50 durch einen Abschnitt des einen Stützringes 31 oder 32 verschlossen wird.

Der in der Figur 9 gezeigte Dichtungsring 2 weist zwar eine konvexe Wölbung 7 der Rückenfläche 6 auf, jedoch ist dieser Dichtungsring 2 kein C-Profil-Dichtungsring, wie beispielsweise in den Figuren 5 bis 8 dargestellt. Vielmehr weist der Dichtungsring 2 eine Bogenform oder eine Halbmondform auf. Die Stirnfläche 5 des Dichtungsringes 2 ist folglich konkav gewölbt, weist also eine konkave Wölbung (Delle) 7.1 auf. Demnach sind die Rückenfläche 6 und die Stirnfläche 5 des Dichtungsringes 2 inkongruent zueinander ausgebildet. Die Deformierung des Dichtungsringes 2 selbst bei Anliegen eines definierten Hochdruckes erfolgt, wie beispielsweise zu den Figuren 6 und 7 beschrieben.

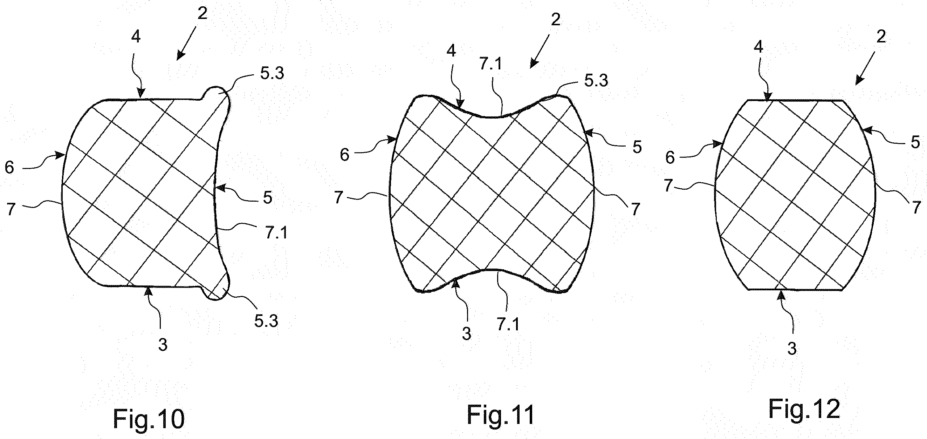

In den Figuren 10 bis 12 sind jeweils in einer Schnittdarstellung eine Ausführungsform eines Dichtungsringes 2 einer erfindungsgemäßen Hochdruckdichtungsanordnung 1 dargestellt. Alle Dichtungsringe 2 der Figuren 10 bis 12 weisen jeweils eine Rückenfläche 6 mit einer konvexen Wölbung 7 auf. Unterschiede zeigen sich jedoch in der Stirnfläche 5 des Dichtungsringes 2. So weist der Dichtungsring 2 der Figur 10 eine konkave Wölbung 7.1 bzw. konkave Delle 7.1 mit ausgebildeten Vorsprüngen 5.3 auf. Der in der Figur 11 gezeigte Dichtungsring 2 weist dagegen eine Stirnfläche 5 ebenfalls mit einer konvexen Wölbung 7 auf. Sodass die Rückenfläche 6 und die Stirnfläche 5 des Dichtungsringes 2 kongruent zueinander ausgebildet sind. Jedoch weist zusätzlich die Innenumfangsfläche 3 sowie auch die Außenumfangsfläche 4 eine konkave Wölbung 7.1 bzw. eine konkave Delle 7.1 auf. Der in der Figur 12 gezeigte Dichtungsring 2 weist eine sogenannte Tonnenform auf. Das bedeutet, dass die Rückenfläche 6 und die Stirnfläche 5 derart kongruent zueinander ausgebildet sind, dass beide Flächen 6 und 5 eine konvexe Wölbung 7 aufweisen. Die Innenumfangsfläche 3 sowie die Außenumfangsfläche 4 sind dagegen im Wesentlichen planar, also ohne Wölbung oder Delle, ausgebildet.

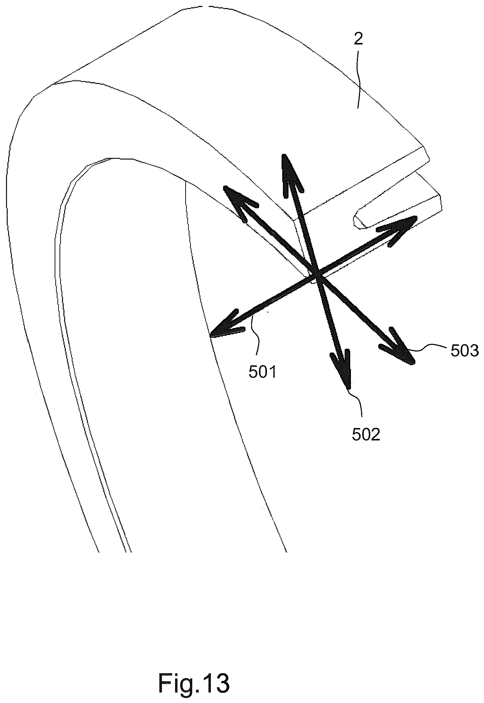

In der Figur 13 ist schematisch eine Darstellung der Richtungsbezeichnungen anhand einer Ausführungsform eines Dichtungsringes 2 dargestellt. Eine Ausdehnung des Dichtungsringes 2 ist folglich in Längsrichtung 501 (längs oder axial), in Querrichtung 502 (quer, lateral oder radial) und/oder in Umfangsrichtung 503 (umlaufend) denkbar.

### Bezugszeichenliste

- 1: Hochdruckdichtungsanordnung
- 2: Dichtungsring
- 3: Innenumfangsfläche
- 4: Außenumfangsfläche
- 5: Stirnfläche
- 5.1: erste Dichtungslippe
- 5.2: zweite Dichtungslippe
- 5.3: Vorsprung
- 6: Rückenfläche
- 7: konvexe Wölbung
- 7.1: konkave Wölbung / konkave Delle
- 8: Flanken
- 9: Lichte / Lichtes Maß / Lichtmaß
- 10: Behälterverschluss
- 11: zylindrischer Abschnitt
- 12: Außenumfangswandung

- 20: Hochdruckbehälter
- 21: zylindrischer Abschnitt
- 22: Innenwandung

- 30: Stützringanordnung
- 31: äußerer Stützring
- 32: innerer Stützring

- 40: Einbauraum
- 41: Seitenfläche
- 42: Bodenfläche

- 50: Spalt

- 60: Aufwölbung / Rückwölbung

- 70: Hohlraum

- 80: Hochdruckdichtungsanordnung - Stand der Technik

- 90: Dichtring - Stand der Technik
- 91: Rückenfläche - Stand der Technik
- 92: Stirnfläche - Stand der Technik
- 93: Lichte / Lichtes Maß / Lichtmaß
- 94: Kanten/Kantenbereiche - Stand der Technik
- 95: Ausdehnung

- 100: Hochdruckanlage

- 501: Längsrichtung / längs / axial
- 502: Querrichtung / quer / lateral / radial
- 503: Umfangrichtung / umlaufend

## Patentansprüche

1. Hochdruckdichtungsanordnung (1) zur Abdichtung eines Behälterverschlusses (10) eines Hochdruckbehälters (20) einer Hochdruckanlage (100),
wobei der Behälterverschluss (10) in einem zylindrischen Abschnitt (21) des Hochdruckbehälters (20) angeordnet ist, und wobei die Hochdruckdichtungsanordnung (1) zumindest
- einen Dichtungsring (2) mit einer sich zumindest axial erstreckenden Innenumfangsfläche (3) und einer sich zumindest axial erstreckenden Außenumfangsfläche (4) sowie einer sich zwischen der Innenumfangsfläche (3) und der Außenumfangsfläche (4) zumindest radial erstreckenden Stirnfläche (5) und einer der Stirnfläche (5) gegenüberliegenden sich zwischen der Innenumfangsfläche (3) und der Außenumfangsfläche (4) zumindest radial erstreckenden Rückenfläche (6) zur Ermöglichung der Abdichtung und Anlage an ein Dichtungsringgegenüber aufweist
wobei die Rückenfläche (6) des Dichtungsringes (2) zumindest abschnittsweise axial nach innen oder nach außen gewölbt ist, insbesondere eine konvexe (7) oder konkave Wölbung (7.1) aufweist, **dadurch gekennzeichnet, dass** der Dichtungsring (2) bei einer Beaufschlagung des mit dem Behälterverschlusses (10) verschlossenen Hochdruckbehälters (20) mit Druck, insbesondere Hochdruck, dazu eingerichtet ist, sich derart zu deformieren, dass die Rückenfläche (6) des Dichtungsringes (2) sich derart an ein Dichtungsringgegenüber anlegt, dass ein zwischen dem Dichtungsringgegenüber bestehender Hohlraum (70) zumindest reduziert wird, indem Flanken (8) des Dichtringes (2) bei einer konvexen Wölbung (7) der Rückenfläche (6) in Richtung des Dichtungsringgegenübers deformiert werden oder indem ein Dellental bei einer konkaven Wölbung (7.1) der Rückenfläche (6) in Richtung des Dichtungsringgegenübers deformiert wird.

2. Hochdruckdichtungsanordnung (1) gemäß Anspruch 1,
**dadurch gekennzeichnet, dass**
die Hochdruckdichtungsanordnung (1) eine Stützringanordnung (30) umfassend wenigstens einen Stützring (31, 32), insbesondere eine Stützringanordnung (30) umfassend wenigstens zwei Stützringe (31, 32), nämlich einen äußeren Stützring (31) und einen inneren Stützring (32) aufweist, wobei beide Stützringe (31, 32) einander kontaktierend angeordnet sind und zumindest der innere Stützring (32) die Rückenfläche (6) des Dichtungsringes (2) wenigstens abschnittsweise kontaktiert.

3. Hochdruckdichtungsanordnung (1) gemäß einem der vorangegangenen Ansprüche,
**dadurch gekennzeichnet, dass**
der Dichtungsring (2) ein C-Profil Dichtungsring ist, dessen Stirnfläche (5) eine erste Dichtungslippe (5.1) und eine zweite Dichtungslippe (5.2) sowie ein Lichtmaß (9) aufweist.

4. Hochdruckdichtungsanordnung (1) gemäß einem der vorangegangenen Ansprüche 1 oder 2,
**dadurch gekennzeichnet, dass**
die Stirnfläche (5) des Dichtungsringes (2) zumindest abschnittsweise axial nach innen oder nach außen gewölbt ist, insbesondere eine konvexe (7) oder konkave Wölbung (7.1) aufweist.

5. Hochdruckdichtungsanordnung (1) gemäß einem der vorangegangenen Ansprüche 1, 2 oder 4,
**dadurch gekennzeichnet, dass**
die Stirnfläche (5) des Dichtungsringes (2) kongruent zur Rückenfläche (6) des Dichtungsringes (2) ausgebildet ist, insbesondere, dass die Stirnfläche (5) eine konvexe Wölbung (7) aufweist, welche kongruent zur konvexen Wölbung (7) der Rückenfläche (6) ausgebildet ist.

6. Hochdruckdichtungsanordnung (1) gemäß einem der vorangegangenen Ansprüche 1, 2 oder 4,
**dadurch gekennzeichnet, dass**
die Stirnfläche (5) des Dichtungsringes (2) inkongruent, insbesondere gegensätzlich zur Rückenfläche (6) des Dichtungsringes (2) ausgebildet ist, insbesondere, dass die Stirnfläche (5) eine konkave Wölbung (7.1) und die Rückenfläche eine konvexe Wölbung (7) aufweisen.

7. Hochdruckdichtungsanordnung (1) gemäß einem der vorangegangenen Ansprüche, **dadurch gekennzeichnet, dass**
zumindest die Innenumfangsfläche (3) oder die Außenumfangsfläche (4) zumindest in Querrichtung betrachtet planar ausgebildet ist, oder dass zumindest die Innenumfangsfläche (3) oder die Außenumfangsfläche (4) eine konvexe Wölbung (7) oder eine konkave Wölbung (7.1) aufweist.

8. Hochdruckanlage (100) zur Hochdruckbehandlung eines Produktes, wobei die Hochdruckanlage (100) einen Hochdruckbehälter (20) sowie einen den Hochdruckbehälter (20) verschließenden Behälterverschluss (10) aufweist, wobei der Behälterverschluss (10) einen ringförmigen Einbauraum (40) zur Aufnahme einer Hochdruckdichtungsanordnung (1) gemäß einem der vorangegangenen Ansprüche aufweist, und wobei die Hochdruckanlage (100) die Hochdruckdichtungsanordnung (1) gemäß einem der vorangegangenen Ansprüche wenigstens zur Abdichtung eines zumindest während eines mit Hochdruck beaufschlagten Zustandes des Hochdruckbehälters (20) entstehenden Spaltes (50) zwischen dem Hochdruckbehälter (20) und dem Behälterverschluss (10) aufweist.

9. Hochdruckanlage (100) gemäß Anspruch 8,
**dadurch gekennzeichnet, dass**
der Einbauraum (40) eine sich radial sowie in Umfangsrichtung des Behälterverschlusses (10) erstreckende Seitenfläche (41) und eine sich axial sowie in Umfangsrichtung des Behälterverschlusses (10) erstreckende Bodenfläche (42) aufweist, wobei die Innenumfangsfläche (3) des Dichtungsringes (2) zu der Bodenfläche (42) des Einbauraumes (40) und die Rückenfläche (6) des Dichtungsringes (2) zu der Seitenfläche (41) des Einbauraumes (40) ausgerichtet sind.

10. Hochdruckanlage (100) gemäß einem der vorangegangenen Ansprüche 8 oder 9, **dadurch gekennzeichnet, dass**
in einem drucklosen Zustand des Hochdruckbehälters (20) der Dichtungsring (2) derart im Einbauraum (40) angeordnet ist, dass zwischen dem Dichtungsring (2) und der Seitenfläche (41) des Einbauraums (40) zumindest abschnittsweise ein Hohlraum (70) ausgebildet ist

11. Verwendung einer Hochdruckdichtungsanordnung (2) gemäß einem der vorangegangenen Ansprüche 1 bis 7 zur Abdichtung eines Spaltes (50) zwischen einem Behälterverschluss (10) und einem Hochdruckbehälter (20) einer Hochdruckanlage (100) gemäß einem der vorangegangenen Ansprüche 8 bis 10, wobei der Dichtungsring (2) bei einer Beaufschlagung des mit dem Behälterverschlusses (10) verschlossenen Hochdruckbehälters (20) mit Druck, insbesondere Hochdruck, sich derart deformiert, dass die Rückenfläche (6) des Dichtungsringes (2) sich derart an ein Dichtungsringgegenüber anlegt, dass ein zwischen dem Dichtungsringgegenüber bestehender Hohlraum (70) zumindest reduziert wird, indem Flanken (8) des Dichtringes (2) bei einer konvexen Wölbung (7) der Rückenfläche (6) in Richtung des Dichtungsringgegenübers deformiert werden oder indem ein Dellental bei einer konkaven Wölbung (7.1) der Rückenfläche (6) in Richtung des Dichtungsringgegenübers deformiert wird.

## Claims

1. High-pressure sealing arrangement (1) for sealing a vessel closure (10) of a high-pressure vessel (20) of a high-pressure system (100),
wherein the vessel closure (10) is arranged in a cylindrical section (21) of the high-pressure vessel (20), and wherein the high-pressure sealing arrangement (1) comprises at least
• a sealing ring (2) having an inner circumferential surface (3) extending at least axially and an outer circumferential surface (4) extending at least axially as well as an end face (5) extending at least radially between the inner circumferential surface (3) and the outer circumferential surface (4) and a back face (6) extending at least radially between the inner circumferential surface (3) and the outer circumferential surface (4) opposite the end face (5) for enabling sealing and contact against a sealing ring counterpart
wherein
the back face (6) of the sealing ring (2) is curved at least sectionally axially inwardly or outwardly, in particular has a convex curvature (7) or concave curvature (7.1), **characterized in that**
the sealing ring (2), when the high-pressure vessel (20) closed by the vessel closure (10) is subjected to pressure, in particular high pressure, is configured to deform in such a way that the back face (6) of the sealing ring (2) bears against a sealing ring counterpart in such a way that a cavity (70) existing between the sealing ring counterpart is at least reduced, by flanks (8) of the sealing ring (2) being deformed in the direction of the sealing ring counterpart in the case of a convex curvature (7) of the back face (6) or by a depression valley being deformed in the direction of the sealing ring counterpart in the case of a concave curvature (7.1) of the back face (6).

2. High-pressure sealing arrangement (1) according to claim 1,
**characterized in that**
the high-pressure sealing arrangement (1) comprises a support ring arrangement (30) comprising at least one support ring (31, 32), in particular a support ring arrangement (30) comprising at least two support rings (31, 32), namely an outer support ring (31) and an inner support ring (32), wherein both support rings (31, 32) are arranged in contact with one another and at least the inner support ring (32) contacts the back face (6) of the sealing ring (2) at least sectionally.

3. High-pressure sealing arrangement (1) according to one of the preceding claims, **characterized in that**
the sealing ring (2) is a C-profile sealing ring, the end face (5) of which has a first sealing lip (5.1) and a second sealing lip (5.2) as well as a clearance dimension (9).

4. High-pressure sealing arrangement (1) according to one of the preceding claims 1 or 2, **characterized in that**
the end face (5) of the sealing ring (2) is curved at least sectionally axially inwardly or outwardly, in particular has a convex curvature (7) or concave curvature (7.1).

5. High-pressure sealing arrangement (1) according to one of the preceding claims 1, 2 or 4,
**characterized in that**
the end face (5) of the sealing ring (2) is formed congruently with the back face (6) of the sealing ring (2), in particular that the end face (5) has a convex curvature (7), which is formed congruently with the convex curvature (7) of the back face (6).

6. High-pressure sealing arrangement (1) according to one of the preceding claims 1, 2 or 4,
**characterized in that**
the end face (5) of the sealing ring (2) is formed incongruently, in particular oppositely, to the back face (6) of the sealing ring (2), in particular that the end face (5) has a concave curvature (7.1) and the back face has a convex curvature (7).

7. High-pressure sealing arrangement (1) according to one of the preceding claims, **characterized in that**
at least the inner circumferential surface (3) or the outer circumferential surface (4) is formed planar at least when viewed in the transverse direction, or that at least the inner circumferential surface (3) or the outer circumferential surface (4) has a convex curvature (7) or a concave curvature (7.1).

8. High-pressure system (100) for the high-pressure treatment of a product, wherein the high-pressure system (100) comprises a high-pressure vessel (20) as well as a vessel closure (10) closing the high-pressure vessel (20), wherein the vessel closure (10) has an annular installation space (40) for receiving a high-pressure sealing arrangement (1) according to one of the preceding claims, and wherein the high-pressure system (100) comprises the high-pressure sealing arrangement (1) according to one of the preceding claims at least for sealing a gap (50) arising between the high-pressure vessel (20) and the vessel closure (10) at least during a state of the high-pressure vessel (20) subjected to high pressure.

9. High-pressure system (100) according to claim 8,
**characterized in that**
the installation space (40) has a side surface (41) extending radially as well as in the circumferential direction of the vessel closure (10) and a bottom surface (42) extending axially as well as in the circumferential direction of the vessel closure (10), wherein the inner circumferential surface (3) of the sealing ring (2) is aligned toward the bottom surface (42) of the installation space (40) and the back face (6) of the sealing ring (2) is aligned toward the side surface (41) of the installation space (40).

10. High-pressure system (100) according to one of the preceding claims 8 or 9, **characterized in that**
in a pressureless state of the high-pressure vessel (20), the sealing ring (2) is arranged in the installation space (40) in such a way that a cavity (70) is formed at least sectionally between the sealing ring (2) and the side surface (41) of the installation space (40).

11. Use of a high-pressure sealing arrangement (2) according to one of the preceding claims 1 to 7 for sealing a gap (50) between a vessel closure (10) and a high-pressure vessel (20) of a high-pressure system (100) according to one of the preceding claims 8 to 10, wherein the sealing ring (2), when the high-pressure vessel (20) closed by the vessel closure (10) is subjected to pressure, in particular high pressure, deforms in such a way that the back face (6) of the sealing ring (2) bears against a sealing ring counterpart in such a way that a cavity (70) existing between the sealing ring counterpart is at least reduced, by flanks (8) of the sealing ring (2) being deformed in the direction of the sealing ring counterpart in the case of a convex curvature (7) of the back face (6) or by a depression valley being deformed in the direction of the sealing ring counterpart in the case of a concave curvature (7.1) of the back face (6).

## Revendications

1. Ensemble d'étanchéité haute pression (1) destiné à l'étanchéité d'une fermeture de récipient (10) d'un récipient haute pression (20) d'une installation haute pression (100),
dans lequel la fermeture de récipient (10) est disposée dans une section cylindrique (21) du récipient haute pression (20), et dans lequel l'ensemble d'étanchéité haute pression (1) comprend au moins
• une bague d'étanchéité (2) comportant une surface circonférentielle intérieure (3) s'étendant au moins axialement et une surface circonférentielle extérieure (4) s'étendant au moins axialement ainsi qu'une face frontale (5) s'étendant au moins radialement entre la surface circonférentielle intérieure (3) et la surface circonférentielle extérieure (4) et une face arrière (6) opposée à la face frontale (5), s'étendant au moins radialement entre la surface circonférentielle intérieure (3) et la surface circonférentielle extérieure (4), afin de permettre l'étanchéité et l'appui contre un élément opposé à la bague d'étanchéité
dans lequel
la face arrière (6) de la bague d'étanchéité (2) est courbée au moins par sections axialement vers l'intérieur ou vers l'extérieur, présentant notamment une courbure convexe (7) ou une courbure concave (7.1), **caractérisé en ce que** la bague d'étanchéité (2), lorsqu'une pression, notamment une haute pression, est appliquée au récipient haute pression (20) fermé par la fermeture de récipient (10), est conçue pour se déformer de telle sorte que la face arrière (6) de la bague d'étanchéité (2) vienne s'appliquer contre un élément opposé à la bague d'étanchéité de manière à réduire au moins une cavité (70) existant entre celui-ci et la bague d'étanchéité, **en ce que** des flancs (8) de la bague d'étanchéité (2) sont déformés en direction de l'élément opposé à la bague d'étanchéité dans le cas d'une courbure convexe (7) de la face arrière (6), ou **en ce qu'**un fond de dépression est déformé en direction de l'élément opposé à la bague d'étanchéité dans le cas d'une courbure concave (7.1) de la face arrière (6).

2. Ensemble d'étanchéité haute pression (1) selon la revendication 1,
**caractérisé en ce que**
l'ensemble d'étanchéité haute pression (1) comprend un ensemble de bagues de support (30) comprenant au moins une bague de support (31, 32), notamment un ensemble de bagues de support (30) comprenant au moins deux bagues de support (31, 32), à savoir une bague de support extérieure (31) et une bague de support intérieure (32), les deux bagues de support (31, 32) étant disposées en contact l'une avec l'autre et au moins la bague de support intérieure (32) étant en contact avec la face arrière (6) de la bague d'étanchéité (2) au moins par sections.

3. Ensemble d'étanchéité haute pression (1) selon l'une quelconque des revendications précédentes,
**caractérisé en ce que**
la bague d'étanchéité (2) est une bague d'étanchéité à profil en C, dont la face frontale (5) comporte une première lèvre d'étanchéité (5.1) et une seconde lèvre d'étanchéité (5.2) ainsi qu'un jeu (9).

4. Ensemble d'étanchéité haute pression (1) selon l'une quelconque des revendications précédentes 1 ou 2,
**caractérisé en ce que**
la face frontale (5) de la bague d'étanchéité (2) est courbée au moins par sections axialement vers l'intérieur ou vers l'extérieur, présentant notamment une courbure convexe (7) ou une courbure concave (7.1).

5. Ensemble d'étanchéité haute pression (1) selon l'une quelconque des revendications précédentes 1, 2 ou 4,
**caractérisé en ce que**
la face frontale (5) de la bague d'étanchéité (2) est réalisée de manière congruente à la face arrière (6) de la bague d'étanchéité (2), notamment **en ce que** la face frontale (5) présente une courbure convexe (7) réalisée de manière congruente à la courbure convexe (7) de la face arrière (6).

6. Ensemble d'étanchéité haute pression (1) selon l'une quelconque des revendications précédentes 1, 2 ou 4,
**caractérisé en ce que**
la face frontale (5) de la bague d'étanchéité (2) est réalisée de manière non congruente, notamment de manière opposée, à la face arrière (6) de la bague d'étanchéité (2), notamment **en ce que** la face frontale (5) présente une courbure concave (7.1) et la face arrière présente une courbure convexe (7).

7. Ensemble d'étanchéité haute pression (1) selon l'une quelconque des revendications précédentes,
**caractérisé en ce que**
au moins la surface circonférentielle intérieure (3) ou la surface circonférentielle extérieure (4) est réalisée de manière plane au moins lorsqu'elle est considérée dans la direction transversale, ou **en ce qu'**au moins la surface circonférentielle intérieure (3) ou la surface circonférentielle extérieure (4) présente une courbure convexe (7) ou une courbure concave (7.1).

8. Installation haute pression (100) destinée au traitement haute pression d'un produit, l'installation haute pression (100) comprenant un récipient haute pression (20) ainsi qu'une fermeture de récipient (10) fermant le récipient haute pression (20), la fermeture de récipient (10) comportant un espace de montage annulaire (40) destiné à recevoir un ensemble d'étanchéité haute pression (1) selon l'une quelconque des revendications précédentes, et l'installation haute pression (100) comprenant l'ensemble d'étanchéité haute pression (1) selon l'une quelconque des revendications précédentes au moins pour l'étanchéité d'un jeu (50) apparaissant entre le récipient haute pression (20) et la fermeture de récipient (10) au moins pendant un état dans lequel le récipient haute pression (20) est soumis à une haute pression.

9. Installation haute pression (100) selon la revendication 8,
**caractérisée en ce que**
l'espace de montage (40) comporte une surface latérale (41) s'étendant radialement ainsi que dans la direction circonférentielle de la fermeture de récipient (10) et une surface de fond (42) s'étendant axialement ainsi que dans la direction circonférentielle de la fermeture de récipient (10), la surface circonférentielle intérieure (3) de la bague d'étanchéité (2) étant orientée vers la surface de fond (42) de l'espace de montage (40) et la face arrière (6) de la bague d'étanchéité (2) étant orientée vers la surface latérale (41) de l'espace de montage (40).

10. Installation haute pression (100) selon l'une quelconque des revendications précédentes 8 ou 9,
**caractérisée en ce que**
dans un état sans pression du récipient haute pression (20), la bague d'étanchéité (2) est disposée dans l'espace de montage (40) de telle sorte qu'une cavité (70) est formée au moins par sections entre la bague d'étanchéité (2) et la surface latérale (41) de l'espace de montage (40).

11. Utilisation d'un ensemble d'étanchéité haute pression (2) selon l'une quelconque des revendications précédentes 1 à 7 pour l'étanchéité d'un jeu (50) entre une fermeture de récipient (10) et un récipient haute pression (20) d'une installation haute pression (100) selon l'une quelconque des revendications précédentes 8 à 10, la bague d'étanchéité (2), lorsqu'une pression, notamment une haute pression, est appliquée au récipient haute pression (20) fermé par la fermeture de récipient (10), se déformant de telle sorte que la face arrière (6) de la bague d'étanchéité (2) vienne s'appliquer contre un élément opposé à la bague d'étanchéité de manière à réduire au moins une cavité (70) existant entre celui-ci et la bague d'étanchéité, en ce que des flancs (8) de la bague d'étanchéité (2) sont déformés en direction de l'élément opposé à la bague d'étanchéité dans le cas d'une courbure convexe (7) de la face arrière (6), ou en ce qu'un fond de dépression est déformé en direction de l'élément opposé à la bague d'étanchéité dans le cas d'une courbure concave (7.1) de la face arrière (6).
